# EUROPEAN PATENT APPLICATION

(11) **EP 4 787 872 A1**
(43) Date of publication of application: **05.08.2026**
(21) Application number: 24873151.5
(22) Date of filing: 27.09.2024
(51) Int. Cl.: H04N 21/475, G06F 16/735, H04N 21/466, H04N 21/25

(54) **DATA DISTRIBUTION METHOD, APPARATUS, AND COMPUTER READABLE STORAGE MEDIUM**

(30) Priority: 27.09.2023 CN 202311274109
(71) Applicant: Lemon Inc., Grand Cayman, KY1-1205 (KY)
(72) Inventor: LI, Xiusong, Beijing 100028 (CN); DUAN, Yi, Beijing 100028 (CN); QIU, Hao, Beijing 100028 (CN); YANG, Tengfei, Singapore 018960 (SG); ZHANG, Keyang, Singapore 018960 (SG); YANG, Zhenheng, Beijing 100028 (CN); CHEN, Zhijie, Beijing 100028 (CN); DU, Yuzhang, Beijing 100028 (CN); YANG, Saboya, Beijing 100028 (CN); YE, Weiyi, Beijing 100028 (CN)
(74) Representative: Marks & Clerk LLP
(86) International application number: PCT/SG2024/050629
(87) International publication number: WO 2025/071494

(57) **Abstract**

The present disclosure relates to a data distribution method, an apparatus, and a computer readable storage medium, which relate to the technical field of terminals. The data distribution method comprises: displaying first multimedia content data selected from a first database according to a first distribution strategy; in response to a feedback trigger condition being met, displaying a feedback interface; receiving natural language instructions from a user by means of the feedback interface; and displaying, on the basis of a machine understanding result of the natural language instructions, second multimedia content data selected from a second database according to a second distribution strategy, wherein the second distribution strategy is obtained by using the machine understanding result to adjust the first distribution strategy.

## Description

### CROSS-REFERENCE TO RELATED APPLICATIONS

The present application is based on and claims priority to Chinese Application No. 202311274109.X, filed on September 27, 2023, which is incorporated herein by reference in its entirety.

### TECHNICAL FIELD

The present disclosure relates to the field of terminal technologies, and in particular, to a data distribution method and apparatus, and a computer-readable storage medium.

### BACKGROUND

A multimedia application can push multimedia content to a user through a data distribution algorithm. For example, the multimedia application can distribute corresponding multimedia content to the user based on information such as a user profile and feedback such as liking, adding to favorites, and skipping of the user on various categories of multimedia content.

### SUMMARY

According to a first aspect of some embodiments of the present disclosure, a data distribution method is provided. The data distribution method includes: displaying first multimedia content data that is selected from a first database based on a first distribution strategy; displaying a feedback interface in response to a feedback trigger condition being met; receiving a natural language instruction from a user through the feedback interface; and displaying, based on a machine understanding result of the natural language instruction, second multimedia content data that is selected from a second database based on a second distribution strategy, where the second distribution strategy is obtained by adjusting the first distribution strategy according to the machine understanding result.

In some embodiments, the first distribution strategy includes one or more selection conditions, and each of the selection conditions includes one or more dimensions; and the machine understanding result includes adjustment information for at least one dimension of at least one selection condition, or includes a new selection condition.

In some embodiments, the dimensions of the each selection condition include description information and a propensity-based selection for multimedia content data, the multimedia content data being with the description information.

In some embodiments, the dimensions of the selection condition further include at least one of a degree of propensity of the propensity-based selection or an effective time of the selection condition.

In some embodiments, the second multimedia content data is selected based on a similarity between an embedding vector of the second distribution strategy and an embedding vector of multimedia content data in the second database.

In some embodiments, the feedback trigger condition includes performing a specified operation on the first multimedia content data.

In some embodiments, the specified operation includes a trigger operation on an entry control for the feedback interface.

In some embodiments, displaying the feedback interface in response to the feedback trigger condition being met includes: displaying, in a playback interface of the first multimedia content data, an interaction panel of the first multimedia content data in response to an interaction operation on the first multimedia content data, where the interaction panel includes the entry control for the feedback interface; and displaying the feedback interface in response to a trigger operation of the user on the entry control.

In some embodiments, displaying the feedback interface in response to the feedback trigger condition being met includes: displaying, in a playback interface of the first multimedia content data, a questionnaire interface in response to a switching operation on the first multimedia content data, where the questionnaire interface includes candidate feedback information and the entry control for the feedback interface; and displaying the feedback interface in response to a trigger operation of the user on the entry control.

In some embodiments, displaying, based on the machine understanding result of the natural language instruction, the second multimedia content data that is selected from the second database based on the second distribution strategy includes: displaying the machine understanding result of the natural language instruction; and displaying, in response to the user confirming the machine understanding result, the second multimedia content data that is selected from the second database based on the second distribution strategy.

In some embodiments, the data distribution method further includes: displaying a history record interface, where the history record interface includes one or more historical machine understanding results; and displaying, in response to a cancellation operation of the user on at least part of the historical machine understanding results, third multimedia content data that is selected from a third database based on an uncanceled historical machine understanding result.

In some embodiments, the data distribution method further includes: displaying, in a playback interface of the second multimedia content data, a history entry control for triggering a display of the history record interface.

In some embodiments, receiving the natural language instruction from the user includes: receiving text or voice input by the user and includes the natural language instruction; or receiving a natural language instruction that is selected by the user from one or more candidate natural language instructions.

In some embodiments, the machine understanding result includes description information and a propensity-based selection for multimedia content data, the multimedia content data being with the description information.

In some embodiments, the machine understanding result further includes at least one of a degree of propensity of the propensity-based selection, a source of the multimedia content data, and an effective time of the natural language instruction.

According to a second aspect of some embodiments of the present disclosure, a data distribution apparatus is provided. The data distribution apparatus includes: a memory; and a processor coupled to the memory. The processor is configured to perform the data distribution method according to any one of the above-mentioned embodiments based on instructions stored in the memory.

According to a third aspect of some embodiments of the present disclosure, a computer-readable storage medium is provided. The computer-readable storage medium has a computer program stored therein that, when executed by a processor, causes the data distribution method according to any one of the above-mentioned embodiments to be implemented.

According to a fourth aspect of some embodiments of the present disclosure, a computer program is provided. The computer program includes: instructions that, when executed by a processor, cause the processor to perform the data distribution method according to any one of the above-mentioned embodiments.

From the following detailed description of example embodiments of the present disclosure with reference to the accompanying drawings, other features and advantages of the present disclosure will become clear.

### BRIEF DESCRIPTION OF THE DRAWINGS

In order to more clearly describe the technical solutions in the embodiments of the present disclosure or in the prior art, the accompanying drawings for describing the embodiments or the prior art will be briefly described below. Apparently, the accompanying drawings in the description below show merely some embodiments of the present disclosure, and those of ordinary skill in the art may still derive other accompanying drawings from these accompanying drawings without any creative efforts.
FIG. 1 is a schematic flowchart of a data distribution method according to some embodiments of the present disclosure;
FIG. 2A is a schematic diagram of an example of a playback interface of multimedia content data according to some embodiments of the present disclosure;
FIG. 2B is a schematic diagram of an example of an interaction panel according to some embodiments of the present disclosure;
FIG. 2C is a schematic diagram of an example of a playback interface of multimedia content data according to some other embodiments of the present disclosure;
FIG. 2D is a schematic diagram of an example of a questionnaire interface according to some embodiments of the present disclosure;
FIG. 2E is a schematic diagram of an example of a feedback interface according to some embodiments of the present disclosure;
FIG. 2F is a schematic diagram of an example of a confirmation interface according to some embodiments of the present disclosure;
FIG. 3 is a schematic structural diagram of a data distribution apparatus according to some embodiments of the present disclosure;
FIG. 4 is a schematic structural diagram of a data distribution apparatus according to some other embodiments of the present disclosure; and
FIG. 5 is a schematic structural diagram of a data distribution apparatus according to still some other embodiments of the present disclosure.

### DETAILED DESCRIPTION

The technical solutions in the embodiments of the present disclosure are clearly and completely described below with reference to the accompanying drawings of the embodiments of the present disclosure. However, apparently, the embodiments described are merely some embodiments of the present disclosure rather than all the embodiments. The following description of at least one example embodiment is actually illustrative only, and in no way serves as any limitation to the present disclosure and application or use thereof. All other embodiments obtained by those of ordinary skill in the art based on the embodiments of the present disclosure without any creative effort shall fall within the scope of protection of the present disclosure.

Unless specifically stated otherwise, the relative arrangement of components and steps, numerical expressions, and numerical values set forth in these embodiments do not limit the scope of the present disclosure.

Also, it should be understood that, for ease of description, the sizes of various parts shown in the drawings are not drawn to actual scale.

Technologies, methods, and devices known to those skilled in the art may not be discussed in detail, but where appropriate, such technologies, methods, and devices should be considered as part of the specification.

In all examples shown and discussed here, any specific value should be interpreted as merely illustrative and not as limitations. Therefore, there may be different values in other examples of an example embodiment.

It should be noted that similar reference signs and letters refer to similar items in the following accompanying drawings. Therefore, once a specific item is defined in one of the accompanying drawings, it need not be further discussed in subsequent accompanying drawings.

It is found through analysis that, in the related art, a distribution strategy for multimedia content is adjusted based on several fixed operations of a user. Although interaction operations such as liking, adding to favorites, and skipping can assist in adjusting the distribution strategy, this adjustment is implicit, and the user cannot intuitively learn of the extent of feedback these interaction operations can provide. Therefore, there is a need to use an intuitive manner for the user to provide feedback. For example, various types of multimedia content data and associated adjustment options thereof may be listed for the user to choose. For example, for each type of video, the adjustment option includes increasing or decreasing a distribution frequency, with a degree of increase or decrease further classified into several levels. The adjustment option further includes whether an adjustment is effective in the next week, in the next month, or permanently. However, there are many types of multimedia content data and adjustment manners. If all of these adjustable options are presented to the user, the user needs to perform a plurality of interaction operations for setting, and it is quite difficult for the user to browse through all adjustable information. If only a few options are presented to the user, a purpose of accurate feedback cannot be achieved. Therefore, in the related art, it is difficult to effectively obtain feedback information regarding a data distribution process. As a result, after a lot of multimedia content data is distributed to the user, the data is directly skipped because the data is not what the user intends to receive, wasting network resources and resources on a user terminal.

Therefore, a technical problem to be solved by embodiments of the present disclosure is how to efficiently and accurately obtain feedback information regarding distributed data, to improve the accuracy of distribution of multimedia content data, thereby saving the network resources and the resources on the user terminal.

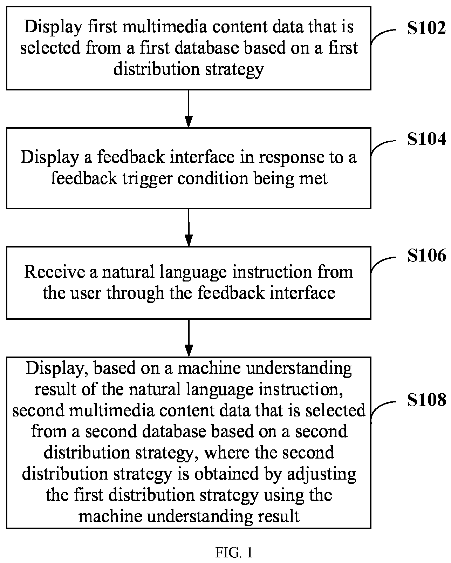

First, an example of a data distribution scenario in some embodiments of the present disclosure is described. During the determination of multimedia content data to be distributed to a user, the multimedia content data may be selected from a database based on a distribution strategy. Multimedia content data in the database is, for example, uploaded by creators of multimedia content. For example, a user, as a creator, may create and upload multimedia content data, and the uploaded multimedia content data may be stored in one or more databases. Each user, as a viewer, may further receive multimedia content data that is selected by a server based on a distribution strategy and distributed to the user. In embodiments of the present disclosure, the distribution strategy may be adjusted based on a natural language instruction of the user. An embodiment of a data distribution method based on a natural language instruction of a user in the present disclosure is described below with reference to FIG. 1.

FIG. 1 is a schematic flowchart of a data distribution method according to some embodiments of the present disclosure. The data distribution method according to the embodiments may be performed on a user terminal, such as a mobile phone, a tablet computer, a personal computer, or a wearable device. A process of the method may be performed on the user terminal by loading an application (APP). The user terminal may perform data interaction with a server over a network when necessary. As shown in FIG. 1, the data distribution method according to the embodiments includes steps S102 to S108.

S102: Displaying first multimedia content data that is selected from a first database based on a first distribution strategy.

In some embodiments, the server may select the first multimedia content data from the first database of the server based on the first distribution strategy, and send the first multimedia content data to the user terminal for display on the terminal. Alternatively, the server may send a plurality of pieces of multimedia content data at a time, and the plurality of pieces of multimedia content data are stored in a first database of the user terminal. The terminal selects the first multimedia content data based on the first distribution strategy and displays the first multimedia content data.

For example, the first distribution strategy is determined based on interaction behavior(s) of a user with one or more pieces of displayed multimedia content data, such as liking and browsing duration. Alternatively, the first distribution strategy may be determined based on a user profile, where the user profile may reflect preference information of the user. Alternatively, if the user has previously provided feedback, the first distribution strategy may be determined based on historical feedback information. The first distribution strategy may alternatively be determined in another manner. Details are not described herein again. When a second distribution strategy is described later, a further description of operation manners of the first distribution strategy and the second distribution strategy is provided.

S104: Displaying a feedback interface in response to a feedback trigger condition being met. The feedback trigger condition may be a specified operation that the user actively performs, or a condition that a behavior of the user is passively accomplished, such as remaining on an interface of the first multimedia content data for longer than specified duration, or playing the first multimedia content data for more than a specified number of times.

In some embodiments, the feedback trigger condition includes performing a specified operation on the first multimedia content data. For example, the specified operation on the first multimedia content means that the specified operation is performed in a playback interface of the first multimedia content data or in another interface associated with the first multimedia content data. The specified operation may be a gesture such as tapping, long pressing, or sliding, or may be an operation indicating a function such as triggering an interface or switching videos. The specified operation may include one or more operations.

In some embodiments, the specified operation includes a trigger operation on an entry control for the feedback interface. The entry control for the feedback interface may be located on an interface associated with the first multimedia content data. For example, the entry control may be directly set on the playback interface of the first multimedia content data. In addition, embodiments of the present disclosure further provide two triggering manners as examples.

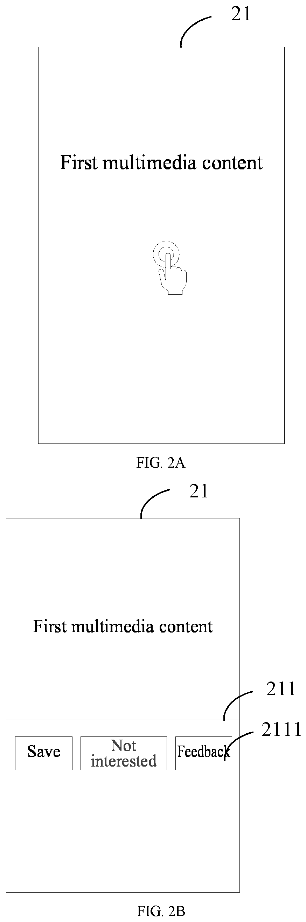

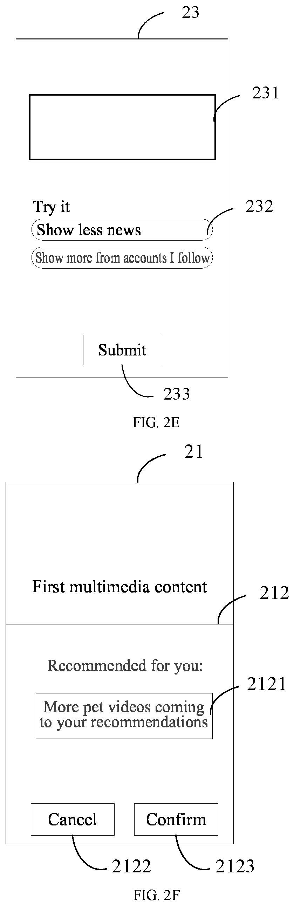

FIG. 2A, FIG. 2B, and FIG. 2E show a triggering manner as an example. In FIG. 2A, a playback interface 21 of the first multimedia content data plays first multimedia content. The user performs an interaction operation on the first multimedia content data in the playback interface 21, for example, long pressing the first multimedia content, to trigger display of an interaction panel 211 shown in FIG. 2B, where the interaction panel 211 includes an entry control 2111 for the feedback interface. In addition, the interaction panel 211 further provides one or more of other interaction operations associated with the first multimedia content data, such as storing, expressing disinterest in the multimedia content, sharing, or adding to favorites. A feedback interface 23 shown in FIG. 2E is displayed in response to a trigger operation of the user on the entry control 2111.

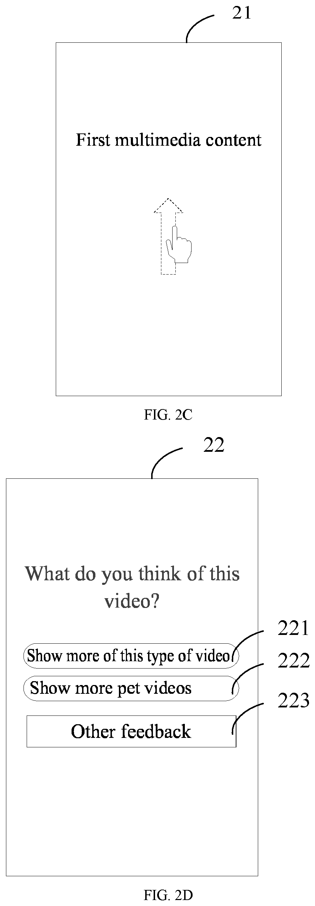

FIG. 2C, FIG. 2D, and FIG. 2E show another triggering manner as an example.

The playback interfaces shown in FIG. 2C and FIG. 2A may be the same. In FIG. 2C, however, the user performs an operation different from that in FIG. 2A. In the playback interface 21 of the first multimedia content data, a questionnaire interface 22 as shown in FIG. 2D is displayed in response to a switching operation on the first multimedia content data, such as a sliding-up operation as shown in the figure. Generally, after the user performs a switching operation on the playback interface of the first multimedia content data, switching to next multimedia content data occurs. In embodiments of the present disclosure, the questionnaire interface 22 is inserted between the currently played first multimedia content data and the next multimedia content data, so that the user provides feedback after browsing the first multimedia content data. A person skilled in the art should know that the long press operation shown in FIG. 2A and the sliding operation shown in FIG. 2C are merely examples, and another specific operation may be used to implement the interaction operation or the switching operation on the multimedia content data based on a requirement. Details are not described herein again.

In some embodiments, after the interaction operation of the user on the first multimedia content data reaches a specified questionnaire trigger condition, a questionnaire interface is displayed in response to the switching operation on the first multimedia content data. For example, the questionnaire trigger condition includes browsing duration exceeding a first threshold or being less than a second threshold, a number of times the first multimedia content data is played exceeding a third threshold, or performing operations such as liking, adding to favorites, or feeding back disinterest on the first multimedia content data. The questionnaire trigger condition may be a combination of part of the above-mentioned conditions based on a requirement, and may include other content. Details are not described herein again.

In the questionnaire interface 22, some candidate feedback information 221 and 222 is provided, and the user may provide feedback by directly selecting these prompts. The questionnaire interface 22 may display one or more pieces of feedback information. The feedback information may be general feedback information, that is, applicable to each piece of multimedia content data, such as "Show more of this type of video" as shown in the feedback information 221. Alternatively, the feedback information may be generated based on one or more pieces of multimedia content data recently browsed by the user. For example, if the first multimedia content data is a video about a cat, the feedback information may be "Show more pet videos" as shown in the feedback information 222.

In addition, the questionnaire interface 22 further includes an entry control 223 for the feedback interface. The feedback interface 23 shown in FIG. 2E is displayed in response to a trigger operation of the user on the entry control.

In FIG. 2E, the feedback interface 23 includes, for example, an input box 231, so that the user inputs text including a natural language instruction, that is, the user inputs a natural language instruction in the form of text. In addition, the user may alternatively input a natural language instruction by voice. For example, the user may start speaking after a voice input control is triggered, and then a voice of the user is recognized as text and displayed in the feedback interface 23.

In some embodiments, the feedback interface 23 may further include candidate feedback information 232, which is a pre-generated natural language instruction. For a generation manner of the candidate feedback information, reference may be made to the candidate feedback information in the questionnaire interface 22. The user may quickly input text by selecting a prompt. For example, after the user selects a prompt, the prompt is automatically displayed in the input box 231, and the user may further edit text in the input box 231.

In some embodiments, the feedback interface 23 may further include a submit control 233, which is used to submit the natural language instruction input by the user for further processing.

S106: Receiving a natural language instruction from the user through the feedback interface. For example, a natural language instruction submitted by the user through the input box 231 in FIG. 2E or a natural language instruction input by the user in a voice input manner is received. The natural language instruction is an unformatted and unconstrained instruction, so that the user can more freely express a desired adjustment to distribution of multimedia content data. The natural language instruction represents feedback information of the user regarding the first multimedia content data.

After the natural language instruction submitted by the user through the feedback interface is obtained, machine understanding, namely natural language understanding (NLU) may be performed on the natural language instruction. For example, the natural language instruction may be processed through a machine learning model, to obtain a machine understanding result of the natural language instruction. This understanding process may be performed by an electronic device such as a computer. In the ideal case, the machine understanding result may accurately reflect an intention while being represented in a more standardized form. For example, if a natural language instruction of the user is "I want to watch more videos of cats, dogs, and the like", then a natural language understanding result may be "Show more pet videos".

The machine understanding result of the natural language instruction may include an extraction result of information of a plurality of dimensions included in the natural language instruction, which may be formatted data (for example, data represented in the form of a key-value pair), or may be data that is still represented in the form of a natural language but has a specified statement structure and specified words. Certainly, the machine understanding result may alternatively be data that cannot be directly interpreted, such as an embedding vector.

In some embodiments, the machine understanding result includes description information and a propensity-based selection for multimedia content data, the multimedia content data being with the description information. The description information may be a theme, category, source, etc. for describing the multimedia content data, such as news, entertainment news, or an uploading account. The propensity-based selection indicates whether the user holds a positive or negative attitude to the multimedia content data with the description information. The positive attitude indicates that the user wants to receive more multimedia content data with the description information, and the negative attitude indicates that the user wants to receive less or no multimedia content data with the description information.

In addition, the machine understanding result may further include at least one of a degree of propensity of the propensity-based selection and an effective time of the natural language instruction. For example, in a case of negative propensity-based selection, the degree of propensity is, for example, "Show less of this type of content", "Try to avoid this type of content", and "Remove all of this type of content", which indicates ascending levels of user reluctance to receive this type of content. The effective time is, for example, "Within this week", "In the next month", etc. If the user does not indicate the degree of propensity, the effective time, etc. in the natural language instruction, a default parameter may be used.

S108: Displaying, based on a machine understanding result of the natural language instruction, second multimedia content data that is selected from a second database based on a second distribution strategy, where the second distribution strategy is obtained by adjusting the first distribution strategy according to the machine understanding result.

To further confirm that the machine understanding result is consistent with an original intention of the user, in some embodiments, the machine understanding result of the natural language instruction is displayed; and the second multimedia content data that is selected from the second database based on the second distribution strategy is displayed in response to the user confirming the machine understanding result. The machine understanding result may be displayed in the feedback interface or in another interface. FIG. 2F is a schematic diagram of an example of a confirmation interface. In FIG. 2F, a confirmation interface 212 includes a machine understanding result "Show more pet videos" of a natural language instruction "I want to watch more videos of cats, dogs, and the like" of the user. The machine understanding result is displayed in a formatted text segment 2121. The user may determine, by triggering a cancel control 2122 or a confirm control 2123, whether to distribute multimedia content data based on the machine understanding result.

If the user does not agree with the machine understanding result, the user may terminate this feedback through a cancellation operation, or return to the feedback interface to provide feedback again.

In some embodiments, the server may select the second multimedia content data from the second database of the server based on the second distribution strategy, and send the second multimedia content data to the user terminal for display on the terminal. Alternatively, the server may send a plurality of pieces of multimedia content data at a time, and the plurality of pieces of multimedia content data are stored in a second database of the user terminal. The terminal selects the second multimedia content data based on the second distribution strategy and displays the second multimedia content data. The first database and the second database may be the same database or different databases.

For example, both the first distribution strategy and the second distribution strategy may include one or more selection conditions, and each selection condition includes one or more dimensions. These dimensions may be description information and the propensity-based selection for multimedia content data, the multimedia content data being with the description information. In addition, the dimensions may further include at least one of a degree of propensity of the propensity-based selection and an effective time of the selection condition.

The machine understanding result includes adjustment information for at least one dimension of at least one selection condition, or includes a new selection condition. If the description information in the machine understanding result appears in a selection condition of the first distribution strategy, indicating that the natural language instruction of the user involves adjustment to an existing selection condition, the selection condition may be adjusted by using the machine understanding result. For example, if a selection condition of the first distribution strategy indicates distributing more pet videos to the user, while the machine understanding result of the natural language instruction of the user indicates distributing fewer pet videos to the user, the selection condition in the first distribution strategy may be adjusted to obtain the second distribution strategy. If the description information in the machine understanding result does not appear in any selection condition of the first distribution strategy, it indicates that the natural language instruction of the user is a new constraint. In this case, a selection condition generated based on the machine understanding result may be directly added to the first distribution strategy to generate the second distribution strategy.

The second multimedia content data may be obtained from the database by converting a selection condition in a distribution strategy to a structured query language (SQL) and executing the SQL. In addition, a distribution strategy and candidate multimedia content data in a database may further be processed by using the machine learning model, to generate vectors corresponding to the distribution strategy and the multimedia content data. Then, the second multimedia content data may be selected based on a similarity between an embedding vector of the second distribution strategy and an embedding vector of multimedia content data in the second database. During selection, for example, multimedia content data that is most similar to the second distribution strategy may be selected as the second multimedia content data. A process of selecting the second multimedia content data is the same as a process of selecting the first multimedia content data. Details are not described herein again.

In embodiments of the present disclosure, the user provides feedback on the first multimedia content data through the natural language instruction, so that feedback information regarding distributed data can be efficiently and accurately obtained. The accuracy of distribution of multimedia content data can be improved based on the feedback information, thereby saving network resources and resources on the user terminal.

Some embodiments of the present disclosure further support the user in delivering one or more natural language instructions, to perform one or more adjustments to the distribution strategy. Correspondingly, for these historical natural language instructions, one or more historical machine understanding results may be displayed in a history record interface. The history record interface is displayed, so that the user can learn of feedback that has taken effect. In some embodiments, third multimedia content data that is selected from a third database is displayed based on an uncanceled historical machine understanding result and in response to a cancellation operation of the user on at least part of the historical machine understanding results. That is, a canceled machine understanding result is no longer effective, a current distribution strategy may be adjusted, based on an uncanceled historical machine understanding result, to generate a third distribution strategy, and then the third multimedia content data that is selected from the third database based on the third distribution strategy is displayed to the user.

A location of an entry to the history record interface may be set based on a requirement. In some embodiments, a history entry control is displayed in a playback interface of the second multimedia content data, where the history entry control is used to trigger display of the history record interface. Therefore, after a natural language instruction of the user takes effect, the history entry control may be displayed on an interface of the second multimedia content data distributed to the user based on the natural language instruction, so that the user can view a machine understanding result of the currently effective natural language instruction.

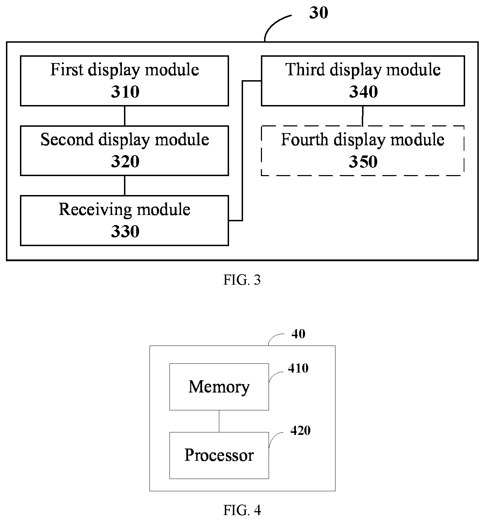

The data distribution method provided in embodiments of the present disclosure is described above. Referring to FIG. 3 to FIG. 5, embodiments of the present disclosure further provide a data distribution apparatus configured to perform the above-mentioned data distribution method. The apparatus may be implemented by software and/or hardware, and may be integrated into an electronic device on which a frontend search application is installed. The electronic device may include but is not limited to mobile terminals such as a smart phone, a notebook computer, a personal digital assistant (PDA), a tablet personal computer (Tablet PC), a portable multimedia player (PMP), a vehicle-mounted terminal (for example, a vehicle navigation terminal), and a wearable device, and fixed terminals such as a digital television and a desktop computer.

FIG. 3 is a schematic structural diagram of a data distribution apparatus according to some embodiments of the present disclosure. As shown in FIG. 3, the data distribution apparatus 30 according to the embodiments includes: a first display module 310 configured to display first multimedia content data that is selected from a first database based on a first distribution strategy; a second display module 320 configured to display a feedback interface in response to a feedback trigger condition being met; a receiving module 330 configured to receive a natural language instruction from a user through the feedback interface; and a third display module 340 configured to display, based on a machine understanding result of the natural language instruction, second multimedia content data that is selected from a second database based on a second distribution strategy, where the second distribution strategy is obtained by adjusting the first distribution strategy according to the machine understanding result.

In some embodiments, the first distribution strategy includes one or more selection conditions, and each of the selection conditions includes one or more dimensions; and the machine understanding result includes adjustment information for at least one dimension of at least one selection condition, or includes a new selection condition.

In some embodiments, the dimensions of the each selection condition include description information and a propensity-based selection for multimedia content data, the multimedia content data being with the description information.

In some embodiments, the dimensions of the selection condition further include at least one of a degree of propensity of the propensity-based selection or an effective time of the selection condition.

In some embodiments, the second multimedia content data is selected based on a similarity between an embedding vector of the second distribution strategy and an embedding vector of multimedia content data in the second database.

In some embodiments, the feedback trigger condition includes performing a specified operation on the first multimedia content data.

In some embodiments, the specified operation includes a trigger operation on an entry control for the feedback interface.

In some embodiments, the second display module 320 is further configured to: display, in a playback interface of the first multimedia content data, an interaction panel of the first multimedia content data in response to an interaction operation on the first multimedia content data, where the interaction panel includes the entry control for the feedback interface; and display the feedback interface in response to a trigger operation of the user on the entry control.

In some embodiments, the second display module 320 is further configured to: display, in a playback interface of the first multimedia content data, a questionnaire interface in response to a switching operation on the first multimedia content data, where the questionnaire interface includes candidate feedback information and the entry control for the feedback interface; and display the feedback interface in response to a trigger operation of the user on the entry control.

In some embodiments, the third display module 340 is further configured to: display the machine understanding result of the natural language instruction; and display, in response to the user confirming the machine understanding result, the second multimedia content data that is selected from the second database based on the second distribution strategy.

In some embodiments, the data distribution apparatus 30 further includes: a fourth display module 350 configured to: display a history record interface, where the history record interface includes one or more historical machine understanding results; and display, in response to a cancellation operation of the user on at least part of the historical machine understanding results, third multimedia content data that is selected from a third database based on an uncanceled historical machine understanding result.

In some embodiments, the third display module 340 is further configured to display, in a playback interface of the second multimedia content data, a history entry control for triggering display of the history record interface.

In some embodiments, the receiving module 330 is configured to: receive text or voice input by the user and includes the natural language instruction; or receive a natural language instruction that is selected by the user from one or more candidate natural language instructions.

In some embodiments, the machine understanding result includes description information and a propensity-based selection for multimedia content data, the multimedia content data being with the description information.

In some embodiments, the machine understanding result further includes at least one of a degree of propensity of the propensity-based selection, a source of the multimedia content data, and an effective time of the natural language instruction.

FIG. 4 is a schematic structural diagram of a data distribution apparatus according to some other embodiments of the present disclosure. As shown in FIG. 4, the data distribution apparatus 40 according to the embodiments includes: a memory 410 and a processor 420 coupled to the memory 410. The processor 420 is configured to perform the data distribution method in any one of the above-mentioned embodiments based on instructions stored in the memory 410.

The memory 410 may include, for example, a system memory, a fixed non-volatile storage medium, etc. The system memory has, for example, an operating system, an application, a boot loader, and other programs stored therein.

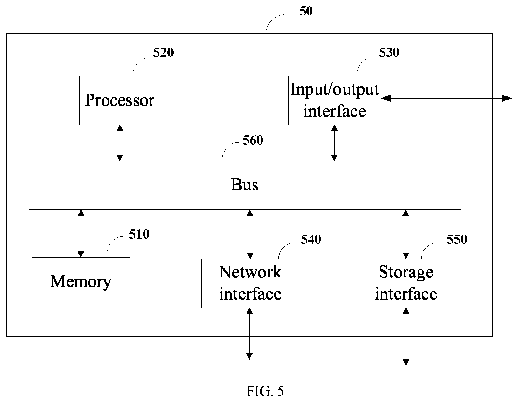

FIG. 5 is a schematic structural diagram of a data distribution apparatus according to still some other embodiments of the present disclosure. As shown in FIG. 5, the data distribution apparatus 50 according to the embodiments includes: a memory 510 and a processor 520. The data distribution apparatus 50 may further include an input/output interface 530, a network interface 540, a storage interface 550, etc. These interfaces 530, 540, and 550, the memory 510, and the processor 520 may be connected to each other through a bus 560, for example. The input/output interface 530 provides a connection interface for an input/output device such as a display, a mouse, a keyboard, or a touch screen. The network interface 540 provides a connection interface for various networking devices. The storage interface 550 provides a connection interface for an external storage device such as an SD card and a USB flash drive.

Embodiments of the present disclosure further provide a computer-readable storage medium having a computer program stored therein. The program, when executed by a processor, causes the data distribution method according to any one of the above-mentioned embodiments to be implemented.

It can be understood that before the use of the technical solutions in the embodiments of the present disclosure, a user shall be informed of the type, range of use, use scenarios, and the like, of involved personal information in an appropriate manner, and the authorization of the user shall be obtained.

For example, in response to reception of an active request from a user, prompt information is sent to the user to clearly inform the user that the requested operation will require access to and use of personal information of the user. As such, the user can independently choose, based on the prompt information, whether to provide the personal information to software or hardware, such as an electronic device, an application, a server, or a storage medium, that performs the operations of the technical solutions of the present disclosure.

In an optional but non-limiting implementation, in response to the reception of the active request from the user, the prompt information may be sent to the user in the form of, for example, a pop-up window, in which the prompt information may be presented in text. Furthermore, the pop-up window may further include a selection control for the user to choose whether to "Agree" or "Disagree" to provide the personal information to the electronic device.

It can be understood that the above-mentioned process of notifying and obtaining user authorization is only illustrative and does not constitute a limitation on the implementations of the present disclosure, and other manners that satisfy the relevant laws and regulations may also be applied in the implementations of the present disclosure.

It should be understood by those skilled in the art that the embodiments of the present disclosure can be provided as a method, a system, or a computer program product. Accordingly, the present disclosure may take a form of an entirely hardware embodiment, an entirely software embodiment, or an embodiment combining software and hardware aspects. Furthermore, the present disclosure may take the form of a computer program product that is implemented on one or more computer-usable non-transitory storage media (including, but not limited to, a disk memory, a CD-ROM, an optical memory, etc.) that include computer-usable program code.

The present disclosure is described with reference to the flowcharts and/or the block diagrams of the method, the device (system), and the computer program product according to the embodiments of the present disclosure. It should be understood that each procedure and/or block in the flowcharts and/or block diagrams, and a combination of procedures and/or blocks in the flowcharts and/or block diagrams may be implemented by computer program instructions. These computer program instructions may be provided to a processor of a general-purpose computer, a special-purpose computer, an embedded processor or other programmable data processing devices to create a machine, such that the instructions executed by the processor of the computer or other programmable data processing devices create means for implementing functions specified in one or more procedures in the flowcharts and/or one or more blocks in the block diagrams.

These computer program instructions may also be stored in a computer-readable memory that may direct the computer or other programmable data processing devices to operate in a specific manner, such that the instructions stored in the computer-readable memory create an article of manufacture including instruction means, and the instruction means implements the functions specified in one or more procedures in the flowcharts and/or one or more blocks in the block diagrams.

These computer program instructions may also be loaded onto the computer or other programmable data processing devices, such that a series of operation steps are executed on the computer or other programmable devices to perform computer-implemented processing, and thus the instructions executed on the computer or other programmable devices provide steps for implementing the functions specified in one or more procedures in the flowcharts and/or one or more blocks in the block diagrams.

The above description is merely illustrative of the preferred embodiments of the present disclosure and is not intended to limit the present disclosure. Any modifications, equivalent substitutions, improvements, etc. made within the spirit and principles of the present disclosure shall fall within the scope of protection of the present disclosure.

## Claims

1. A data distribution method, comprising:
displaying first multimedia content data that is selected from a first database based on a first distribution strategy;
displaying a feedback interface in response to a feedback trigger condition being met;
receiving a natural language instruction from a user through the feedback interface; and
displaying, based on a machine understanding result of the natural language instruction, second multimedia content data that is selected from a second database based on a second distribution strategy, wherein the second distribution strategy is obtained by adjusting the first distribution strategy according to the machine understanding result.

2. The data distribution method according to claim 1, wherein:
the first distribution strategy comprises one or more selection conditions, and each of the selection conditions comprises one or more dimensions; and
the machine understanding result comprises adjustment information for at least one dimension of at least one selection condition, or comprises a new selection condition.

3. The data distribution method according to claim 2, wherein the dimensions of the each selection condition comprise description information and a propensity-based selection for multimedia content data, the multimedia content data being with the description information.

4. The data distribution method according to claim 3, wherein the dimensions of the selection condition further comprise at least one of a degree of propensity of the propensity-based selection or an effective time of the selection condition.

5. The data distribution method according to any one of claims 1 to 4, wherein the second multimedia content data is selected based on a similarity between an embedding vector of the second distribution strategy and an embedding vector of multimedia content data in the second database.

6. The data distribution method according to any one of claims 1 to 5, wherein the feedback trigger condition comprises performing a specified operation on the first multimedia content data.

7. The data distribution method according to claim 6, wherein the specified operation comprises a trigger operation on an entry control for the feedback interface.

8. The data distribution method according to claim 7, wherein displaying the feedback interface in response to the feedback trigger condition being met comprises:
displaying, in a playback interface of the first multimedia content data, an interaction panel of the first multimedia content data in response to an interaction operation on the first multimedia content data, wherein the interaction panel comprises the entry control for the feedback interface; and
displaying the feedback interface in response to a trigger operation of the user on the entry control.

9. The data distribution method according to claim 7, wherein displaying the feedback interface in response to the feedback trigger condition being met comprises:
displaying, in a playback interface of the first multimedia content data, a questionnaire interface in response to a switching operation on the first multimedia content data, wherein the questionnaire interface comprises candidate feedback information and the entry control for the feedback interface; and
displaying the feedback interface in response to a trigger operation of the user on the entry control.

10. The data distribution method according to any one of claims 1 to 9, wherein displaying, based on the machine understanding result of the natural language instruction, the second multimedia content data that is selected from the second database based on the second distribution strategy comprises:
displaying the machine understanding result of the natural language instruction; and
displaying, in response to the user confirming the machine understanding result, the second multimedia content data that is selected from the second database based on the second distribution strategy.

11. The data distribution method according to any one of claims 1 to 10, further comprising:
displaying a history record interface, wherein the history record interface comprises one or more historical machine understanding results; and
displaying, in response to a cancellation operation of the user on at least part of the historical machine understanding results, third multimedia content data that is selected from a third database based on an uncanceled historical machine understanding result.

12. The data distribution method according to claim 11, further comprising:
displaying, in a playback interface of the second multimedia content data, a history entry control for triggering a display of the history record interface.

13. The data distribution method according to any one of claims 1 to 12, wherein receiving the natural language instruction from the user comprises:
receiving text or voice input by the user and comprises the natural language instruction; or
receiving a natural language instruction that is selected by the user from one or more candidate natural language instructions.

14. The data distribution method according to any one of claims 1 to 13, wherein the machine understanding result comprises description information and a propensity-based selection for multimedia content data, the multimedia content data being with the description information.

15. The data distribution method according to claim 14, wherein the machine understanding result further comprises at least one of a degree of propensity of the propensity-based selection, a source of the multimedia content data, and an effective time of the natural language instruction.

16. A data distribution apparatus, comprising:
a memory; and
a processor coupled to the memory, wherein the processor is configured to perform the data distribution method according to any one of claims 1 to 15 based on instructions stored in the memory.

17. A computer-readable storage medium having a computer program stored therein that, when executed by a processor, causes the data distribution method according to any one of claims 1 to 15 to be implemented.

18. A computer program, comprising:
instructions that, when executed by a processor, cause the processor to perform the data distribution method according to any one of claims 1 to 15.
